**Europäisches Patentamt**

**European Patent Office**

**Office européen des brevets**

(19)

(11) Veröffentlichungsnummer : **0 263 936 B1**

(12)

# EUROPÄISCHE PATENTSCHRIFT

(45) Veröffentlichungstag der Patentschrift :
**15.01.92 Patentblatt 92/03**

(51) Int. Cl.$^5$ : **H02M 7/19**

(21) Anmeldenummer : **87111374.2**

(22) Anmeldetag : **06.08.87**

(54) **Sekundärseitig schaltbares Netzgerät.**

(30) Priorität : **17.10.86 DE 3635365**

(43) Veröffentlichungstag der Anmeldung :
**20.04.88 Patentblatt 88/16**

(45) Bekanntmachung des Hinweises auf die
Patenterteilung :
**15.01.92 Patentblatt 92/03**

(84) Benannte Vertragsstaaten :
**CH DE FR GB LI**

(56) Entgegenhaltungen :
**EP-A- 0 134 505**
**DE-B- 1 232 249**

(73) Patentinhaber : **Licentia**
**Patent-Verwaltungs-GmbH**
**Theodor-Stern-Kai 1**
**W-6000 Frankfurt/Main 70 (DE)**

(72) Erfinder : **Beeken, Horst, Dipl.-Ing.**
**Teltowerstrasse 14**
**W-1000 Berlin 20 (DE)**

(74) Vertreter : **Schulze, Harald Rudolf, Dipl.-Ing. et**
**al**
**Licentia Patent-Verwaltungs-GmbH**
**Theodor-Stern-Kai 1**
**W-6000 Frankfurt/Main 70 (DE)**

EP 0 263 936 B1

## Beschreibung

Die Erfindung betrifft ein sekundärseitig schaltbares Netzgerät nach dem Oberbegriff des Patentanspruchs 1.

Ein derartiges Netzgerät ist insbesondere anwendbar zur Herstellung einer hohen Gleichspannung, die z. B. für einen Modulator eines anodenmodulierten Hochleitungssenders oder für Hochspannungsnetzgeräte, die nach einem bestimmten Schaltrhythmus ("duty cycle") geschaltet werden, z. B. in der Teilchenbeschleunigertechnologie verwendbar sind. In der EP 0134 505 A1 ist eine Hochspannungs-Gleichstromversorgung für die Aufheizung des Plasmas in einem Fusionsreaktor beschrieben. Die beschriebene Hochspannungsquelle setzt sich aus mehreren auf eine Diodenkaskade zu- und abschaltbaren Teilspannungsquellen zusammen. Das Schalten der Teilspannungsquellen erfolgt über einzelnen den Quellen zugeordneten Schaltern. Die beschriebenen Teilspannungsquellen werden aus einem Mittelspannungs-Drehstromtrafo - gespeist. Die Gleichrichtung der Wechselspannung erfolgt in jeder Teilspannungsquelle mit einer Drehstrombrückenschaltung.

Soll ein Netzgerät eine hohe Gleichspannung; z. B. 32 kV bei einem Strom von 50A, erzeugen unter Verwendung einzeln schaltbarer, in Reihe geschalteter Teilnetzgeräte, so ist es aus wirtschaftlichen und technischen Gründen zweckmäßig, die Gesamtschaltung des Netzgerätes zu optimieren.

Mehrere hintereinander geschaltete Teilnetzgeräte werden verwendet, um die hohe Gleichspannung in niedrigere Teilgleichspannungen zu zerlegen, die leicht schaltbar sind, z.B. mit sehr schnellen Halbleiterschaltern, die lediglich eine Spannungsfestigkeit von 1,2kV besitzen. Die so erzeugten Teilgleichspannungen werden dann addiert, z.B. mit Hilfe einer Diodenkaskade. Eine Addition von Teilgleichspannungen aus Teilnetzgeräten, auch zum Zwecke der Leistungsreduzierung eines Senders, mit Hilfe von Freilaufdioden, die auch als Diodenkaskade bezeichnet werden, ist bekannt aus AEG-Telefunken Handbuch, Band 3(1970), Halbleitertechnik, Bild 4/59 auf Seite 159. Diese Freilaufdioden sind notwendig, um beim Ausschalten einzelner Netzgeräte mit Hilfe der dort als Schalter benutzten Thyristoren bei Teilleistung den Strom der übrigen angeschalteten Netzgeräte weiterfließen zu lassen. Außerdem ist es möglich, verschiedene Teilnetzgeräte zu unterschiedlichen Zeitpunkten zu schalten, um damit z.B. eine Leistungsänderung vorzunehmen oder eine bestimmte Spannungskurvenform herzustellen.

Bei einem derartigen Netzgerät ist die Wahl eines geeigneten Netztransformators sehr wichtig. Es ist z.B. möglich jedes Teilnerzgerät mit einem eigenen Netztransformator auszurüsten, der jeweils mindestens eine Primärwicklung und mindestens eine Sekundärwicklung besitzt. Eine derartige Lösung ist nachreiligerweise technisch sehr aufwendig und daher unwirrschaftlich.

Es ist daher wesentlich kostengünstiger, lediglich einen Netztransformator zu verwenden, der eine Primärwicklung und mehrere Sekundärwicklungen besitzt. Ein solcher Netztransformator sollte folgende Eigenschaften besitzen:

1. geringe Kapapzitäten, das heißt, die Wicklungen müssen gegeneinander wenig Bedeckungsfläche bieten,

2. es wird ein Schirm benötigt, welcher die beim Schalten der Teilgleichspannungen entstehenden kapazitiven Ströme nicht an das Versorgungsnetz abfließen läßt, sondern diese zur Masse ableitet.

3. aus technisch-wirtschaftlichen Gründen sollten möglichst wenig elektrische Anschlüsse und/oder Herausführungen für möglichst viele Teilnetzgeräte vorhanden sein.

Nach derzeitigem Stand der Technik ist für ein Netzgerät bis zu einer Leistung von ungefähr 250 kW bei einer Gleichspannung von ungefähr 30 kV eine an der Primärseite des Netztransformators anliegende Netzspannung von 380V bei einer Frequenz von 50 Hz oder 60 Hz verwendbar. Für Leistungen über 250 kW werden bei einer 380 V-Netzspannung die auftretenden Primärströme sehr groß und daher technisch schwer beherrschbar. Es werden daher Spannungen zwischen 4 kV$_{eff}$ und 30 kV$_{eff}$ auf der Primärseite des Netztransformators verwendet.

Ein sehr kostengünstig herstellbarer Netztransformator ist als sogenannter Gießharztransformator ausgebildet, der es ermöglicht, die vielen Anschlüsse der Sekundärwicklungen in kostengünstiger Weise herauszuführen. Ein solcher Gießharztransformator ist jedoch nur für eine Primärspannung von 380V wirtschaftlich anwendbar.

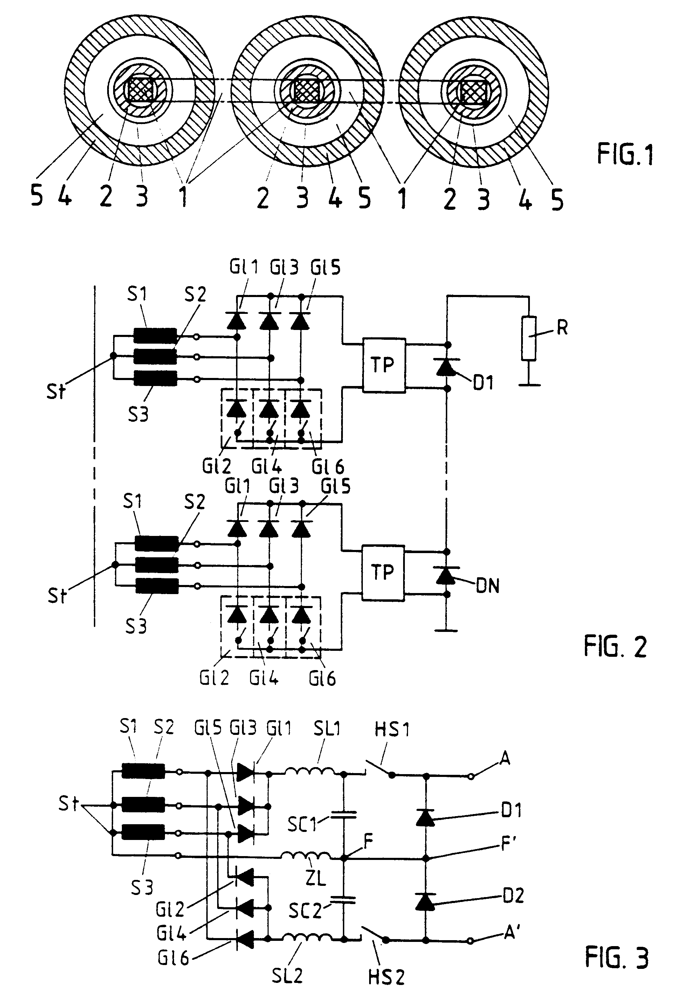

Fig. 1 zeigt einen Querschnitt durch einen solchen Gießharztransformator, der als 3-Phasen-Drehstromtransformator ausgebildet ist. Um einen Eisenkern 1, der z.B. als sogenannter EI-Schnitt ausgebildet ist, sind drei Spuleneinheiten gewickelt, entsprechend den drei Phasen des Drehstromes. Jede Spuleneinheit besteht aus einer unmittelbar um den Eisenkern 1 gewickelten Primärspule 2, einem diese umgebenden Schirm 3 und einer diesen umgebenden Sekundärwicklung 4, deren Windungen mit Gießharz vergossen sind. Zur elektrischen Isolierung ist zwischen Schirm 3 und Sekundärwicklung 4 ein Luftspalt 5 vorhanden, der z.B. eine Durchschlagfestigkeit von 5okV besitzt. Zwischen Eisenkern 1 und Primärwicklung 2, Primärwicklung 2 und Schirm 3, Schirm 3 und Eisenkern 1 ist jeweils eine Durchschlagfestigkeit von mindestens 2,5 kV vorhanden. Aus Fig.

1 ist ersichtlich, daß die in nachteiliger Weise viel Raum beanspruchende Luftstrecke 5 lediglich einmal vorhanden ist. Elektrische Isolierungen für Isolierspannungen von 2,5kV sind dagegen wesentlich raumsparender ausführbar, z.B. mit Hilfe von Kunststoffolien. Die Anschlüsse sind aus dem Gießharz leicht auf der Außenseite der Gießharzspule herauszuführen.

Würde nun in gleicher technologie ein Neiztransformator für Leistungen größer 250 kW aufgebaut, also für eine Netzeingangsspannung von z.B. 20 kV, so müßte die isolierende Luftstrecke 5 für 50 kV dreimal vorhanden sein, nämlich zwischen Eisenkern 1 und Primärwicklung 2, zwischen Primärwicklung 2 und Schirm 3 und zwischen Schirm 3 und Sekundärwicklung 4. Ein solcher Netztransformator würde sehr große Ausmaße besitzen und ist daher wirtschaftlich nicht verwendbar.

Für derartig große Leistungen (größer 250 kW) ist daher lediglich ein Netztransformator verwendbar, in dem ein flüssiges Isoliermaterial, z. B. sogenanntes Transformatorenöl, mit einer möglichst hohen elektrischen Durchschlagfestigkeit verwendet wird. Damit ist zwar ein relativ räumlich kleiner Netztransformator herstellbar, da die elektrisch isolierenden Abstände entsprechend der minimalen Durchschlagfestigkeit des flüssigen Isoliermaterials zu wählen sind. Diese ist jedoch gegenüber Luft wesentlich größer und beträgt z. B. mindestens 30 kV/2,5mm.

Ein Nachteil einer derartigen Transformatorbauart besteht jedoch darin, daß eine Vielzahl von Wicklungsanschlüssen so aus einem flüssigkeitsdichten Transformatorengehäuse herausgeführt werden müssen, daß immer eine Isolierspannung von ungefähr 50 kV zumindest zwischen den Herausführungen und dem Transformatorengehäuse gewährleistet ist. Unter der Annahme, daß eine maximale Gleichspannung von ungefähr 32 kV erzeugt werden soll, daß ein Halbleiterschalter derzeit ungefähr 1,2 kV schalten oder sperren kann sowie unter Berücksichtigung eines

Sicherheitsfaktors ergibt sich, daß ungefähr 48 hinrereinandergeschaltete Teil(gleich)spannungsquellen benötigt werden. Da bei Verwendung eines 3-Phasen-Drehstromtransformators jede Teilspannungsquelle zweckmäßigerweise drei Sekundärwicklungen enthält, bedeutet dieses, daß nach dem Stand der Technik mindestens 48 x 3 = 144 Herausführungen von Wicklungsanschlüssen benötigt werden.

Diese sehr große Anzahl von Herausführungen bedingt in nachteiliger Weise eine wirtschaftlich nicht vertretbare Bauform des Netztransformators.

Im folgenden wird anhand der Fig.2 erläutert. warum nach dem Stand der Technik mindestens drei Herausführungen pro Teilspannungsquelle (Teilnetzgerät) benötigt werden.

Fig. 2 zeigt eine Reihenschaltung mehrerer Teilnetzgeräte. Jedes Teilnetzgerät erzeugt eine schaltbare Teilgleichspannung, die über eine Diodenkaskade D1 bis DN zu einer Gesamtgleichspännung, z.B. 32 kV, addierbar ist und einer Last R, z.B. einer anodenmodulierten Senderendstufe, zuführbar ist. Gemäß dem AEG-Telefunken Halbleiterbuch, Band 3 (1970), Seite 159, enthält jedes Teilnetzgerät z.B. drei Sekundärwicklungen S1 bis S3 einer 3-Phasen-Drehstromtransformators. Bei den Sekundärwicklungen sind die ersten Anschlüsse zu einem Sternpunkt zusammengeschaltet, während zumindest jeweils die zweiten Anschlüsse aus dem Transformatorengehäuse herausgeführt werden müssen, damit diese an eine Zweiweg-Gleichrichteranordnung G11 bis G16 anschließbar sind. Die entstandene Roh-Gleichspannung wird über ein Tiefpaßfilter TP, das z.B. ein LC-Siebglied enthält, geglättet und anschließend an jeweils eine Diode der Diodenkaskade D1 bis DN gelegt.

In diesem Ausführungsbeispiel sind die Gleichrichter GI2, GI4, GI6 als geschaltete Gleichrichterdioden, z.B. Thyristoren oder GTO's dargestellt. Eine entsprechende einphasige Schaltung ist auch aus dem Telefunken-Röhrentaschenbuch 1956, Seite 310, Bild 6, bekannt.

Der Erfindung liegt die Aufgabe zugrunde, ein gattungsgemäßes Netzgerät anzugeben, das aus mehreren Teilnetzgeräten zusammensetzbar ist, das mindestens einen 3-Phasen-Drehstrom-Netztransformator mit mehreren (Drehstrom-) Sekundärwicklungen besitzt und bei welchem für den Anschluß mehrerer Teilspannungsquellen weniger als 3 Sekundärwicklungsanschlüsse pro Teilspannungsquelle erforderlich sind.

Diese Aufgabe wird gelöst durch die im kennzeichnenden Teil des Patentanspruchs 1 angegebenen Merkmale.

Vorteilhafte Ausgestaltungen und/oder Weiterbildungen sind den Unteransprüchen entnehmbar.

Ein erster Vorteil der Erfindung besteht darin, daß in Abhängigkeit von dem Schaltzustand der Schalter HS1, HS2 immer ein automatisches Zu- oder Abschalten der Zusatzdrossel ZL erfolgt. Die Schalter HS1, HS2 bewirken unter anderem ein Umschalten von einer Drehstrom-Sternschaltung (ein Schalter (HS1 oder HS2) geöffnet) auf eine Drehstrom-Brückenschaltung (beide Schalter HS1, HS2 geschlossen). Bei diesem Umschalten ändert sich an sich in störender Weise der sogenannte Brumm (Welligkeit), welcher der zu erzeugenden Gleichspannung überlagert ist. Durch das automatische Zuschalten der Zusatzdrossel ZL bei einem geöffneten Schalter (HS1 oder HS2) wird vorteilhafterweise immer ein gleichbleibender Effektivwert des Brumms erreicht und somit immer eine gleichbleibende Qualität der Gleichspannung.

Ein zweiter Vorteil besteht darin, daß zwischen der Gleichspannungsseite und dem Versorgungsnetz immer eine im wesentlichen gleichbleibende gute Entkopplung vorhanden ist, die unabhängig von dem Schaltzustand der Schalter HS1, HS2 ist. Diese Entkopplung ist z.B. notwendig, damit die Modulation eines Senders nicht in störender Weise auf das Versorgungsnetz einwirkt.

Die Erfindung wird im folgenden anhand von Ausführungsbeispielen näher erläutert unter Bezugnahme auf die weiteren Figuren 3 bis 6.

Fig. 3 zeigt ein Teilnetzgerät, das die drei (Drehstrom-)Sekundärwicklungen S1 bis S3 enthält, deren erste Anschlüsse innerhalb des zugehörigen Netztransformators (nicht dargestellt) zu einem Sternpunkt St zusammengeschaltet sind. Dabei enthält der Netztransformator generell eine primärwicklung, die nicht dargestellt ist. Aus dem Transformatorengehäuse, z.B. vorzugsweise einem Öltransformator, werden vier Anschlüsse herausgeführt, nämlich die zweiten Anschlüsse der Sekundärwicklungen S1 bis S3 und der Sternpunkt St. Diese vier Herausführungen sind durch Kreise dargestellt. An die drei zweiten Anschlüsse sind jeweils die Anoden von drei Gleichrichterdioden Gl1, Gl3, Gl5 angeschlossen deren Kathoden zusammengeschaltet sind, so daß eine sogenannte Drehstrom-Stern-Gleichrichterschaltung entsteht. Die bezüglich des Sternpunktes St entsthende Roh-Gleichspannung mit einer positiven Polarität (+), wird über ein an die Kathoden angeschlossenes erstes LC-Siebglied, bestehend aus einer ersten Siebdrossel SL1 und einem ersten Siebkondensator SC1, geglättet (gesiebt).

Dabei ist der erste Siebkondensator SC1 mit seinem zweiten Anschluß an den Fußpunkt F angeschlossen. Der Fußpunkt F ist über eine Zusatzdrossel ZL an den Sternpunkt St angeschlossen. Die Wirkungsweise der Zusatzdrossel ZL wird später näher erläutert. An dem ersten Siebkondenstor SC1 entsteht eine geglättete Gleichspannung von z.B. ungefähr 670V, die über einen ersten Schalter HS1 schaltbar ist und über die zu der Diodenkaskade D1 bis N (Fig.2) gehörenden Diode D1 addierbar ist.

An die zweiten Anschlüsse der Sekundärwicklungen S1 bis S3 sind außerdem die Kathoden der weiteren Gleichrichterdioden Gl2, Gl4, Gl6 angeschlossen, deren Anoden zusammengeschaltet sind, so daß ebenfalls eine Drehstrom-Stern-Gleichrichterschaltung entsteht. Die bezüglich des Sternpunktes St entstehende Roh-Gleichspannung mit einer negativen Plarität (-) wird über ein an die Anoden angeschlossenes zweites LC-Siebglied, bestehend aus einer zweiten Siebdrossel SL2 und einem zweiten Siebkondensator SC2 geglättet. Der zweite Anschluß des zweiten Siebkondensattors SC2 ist mit dem Fußpunkt F verbunden.

An dem zweiten Siebkondensator SC2 entsteht ebenfalls eine geglättete Gleichspannung von z.B. ungefähr 670V jedoch mit entgegengesetzter Polarirät. Diese Gleichspannung ist über den zweiten Schalter HS2 schaltbar und über die zu der Diodenkaskade D1 bis DN gehörende Diode D2 addierbar. so daß an den Ausgängen A, A′ eine maximale Gleichspannung von 1340V anliegen kann.

Sind die Schalter HS1 und HS2 geschlossen, so entsteht eine Drehstromgleichrichterbrückenschaltung, bei der bei einem 50 Hz-Netz ein Brumm mit einer Grundwelle von 300 Hz und kleiner Amplitude (4,2%eff) entsteht. Demgegenüber entsteht bei einem geöffneten Schalter (HS1 oder HS2) eine Drehstromsterngleichrichterschaltung, bei der ein Brumm mit einer Grundwelle von 150 Hz und großer Amplitude (18,3%eff) entsteht.

Sind nun bei einer beispielhaften Netzfrequenz von 50 Hz die beiden Schalter HS1, HS2 geschlossen, so entsteht an den Ausgängen A, A′ eine Gleichspannung von z.B. 1340 V, der ein Wechselstromanteil (Welligkeit) mit einer Grundfrequenz von 300 Hz überlagert ist. Bei gleichen Bauelementen (Gl1 = GL2 = ... = Gl6, D1 = D2, SL1 = SL2, SC1 = SC2) und einer guten Siebung fließen durch die Siebkondensatoren SC1, SC2 lediglich vernachlässigbare Ströme. Zwischen dem Fußpunkt F und dem Sternpunkt St fließt kein Strom oder ein ebenfalls vernachlässigbarer Strom über die Zusatzdrossel ZL. Wird nun einer der beiden Schalter HS1, HS2 geöffnet, so entsteht an den Ausgängen A, A′ eine Gleichspannung von z.B. 670V, der jedoch ein Wechselstrom anteil mir einer Grundfrequenz von 150 Hz überlagert ist. In diesem Falle wird die Zusatzdrossel Z1 automatisch wirksam. Es entsteht eine bessere Siebung und eine gute Entkopplung zwischen dem (Versorgungs-)Netz und der geschalteten bzw. modulierten Gleichspannung. Eine Entkopplung ist immer dann gegeben, wenn über Zusarzdrossel ZL und eine der Siebdrosseln SL1 oder SL2 ein Spannungsabfall vorhanden ist. Dann fließt immer ein erwünschter Ladestrom in einen der Siebkondensatoren SC1 oder SC2.

Dazu müssen die Zusatzdrossel ZL und eine der Siebdrosseln zusammen eine Induktivität L besitzen gemäß der Formel

$$ L \geq \frac{\sqrt{2} \cdot \tilde{U}_{oeff}}{2\pi \cdot p \cdot f \cdot I_o} $$

, dabei bedeuten

4

$\tilde{U}_{oeff}$      die effektive Spannung der Welligkeit

p      die Pulszahl der Gleichrichterschaltung

f      die Netz- oder Schaltfrequenz

$I_o$      den minimalen Laststrom durch einen zwischen den Anschlüssen A, A' angeschlossenen Lastwider- stand R

Bei geschlossenen Schaltern HS1 und HS2 ist die gleiche Entkopplung vorhanden, wenn an den Siebdrosseln SL1 und SL2 ein Spannungsabfall entsteht. Die Zusatzdrossel ZL ist in diesem Falle unwirksam. Die Induktivität der Summe der beiden Siebdrosseln SL1, SL2 muß dabei ebenfalls die Bedingungen der erwähnten Formel erfüllen.

Aus der Formel ist ersichtlich, daß bei einem unabhängigem Schalten sich $U_{oeff}$ vergrößert da die Pulszahl p von dem Wert 6 auf den Wert 3 erniedrigt wird. Aus der Formel ist außerdem ersichtlich, daß durch die Zusatzdrossel ZL in erwünschter Weise die Welligkeit verringert und ein Ladestrom durch die Siebkondensatoren aufrechterhalten wird.

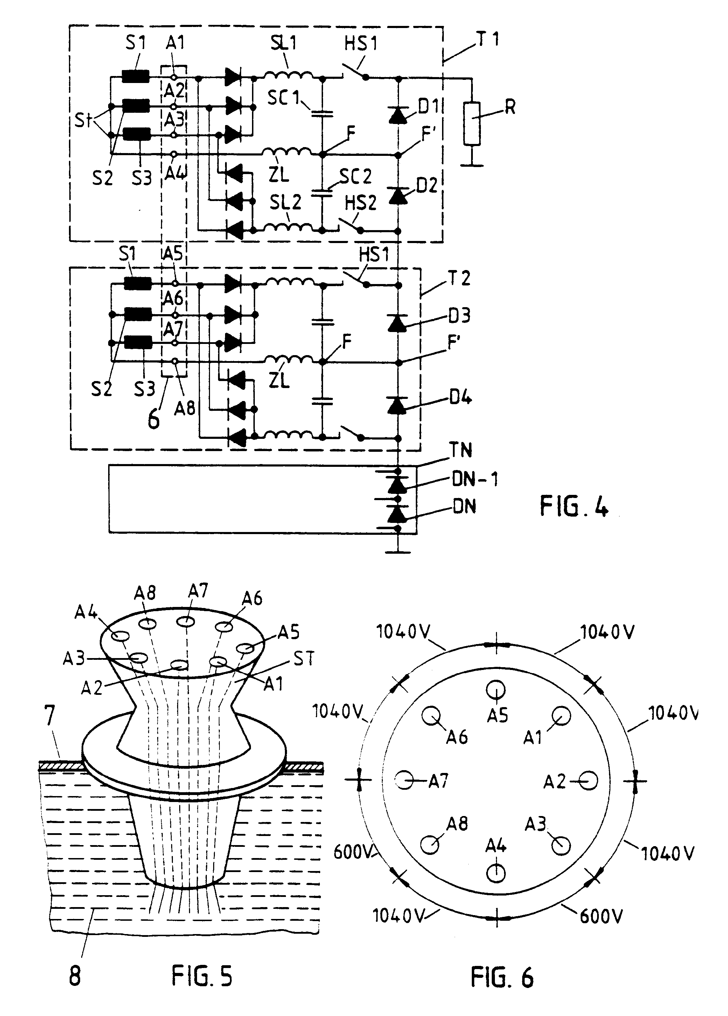

Fig. 4 zeigt eine Reihenschaltung mehrerer Teilnetzgeräte, die denjenigen der Fig. 3 entsprechen. Zum Erzeugen einer beispielhaften Gleichspannung von ungefähr 32 kV, die an der Last R anliegt, sind nun jedoch überraschenderweise für 48 Teilnetzgeräte lediglich 24 Drehstromsekundärwicklungen erforderlich. Die Anzahl der aus dem Netztransformator herauszuführenden Anschlüsse (Anzahl der Herausführungen) beträgt 4 x 24 = 96 (gegenüber 144 gemäß Fig. 2). Benutzt man nun für die Gleichrichtung einen sogenannten 12-Puls-Betrieb, das heißt, man verwendet zwei 3-Phasen-Drehstrom-Netztransformatoren, von denen einer primärseitig im Stern und der andere primärseitig im Dreieck geschaltet ist, so ergeben sich 96 : 2 = 48 Heraus- führungen pro Netztransformator. Diese Anzahl ist auch bei einem Öltransformator technisch und wirtschaftlich herstellbar. Denn die Anzahl ist z.B. auf sehr hochspannungsfeste, sogenannte Stützer ST (Fig. 5) verteilbar, die jeweils acht Herausführungen aufnehmen, z.B. diejenigen, die in Fig. 4 in dem gestrichelt dargestellten Rechteck 6 enthalten sind.

Gemäß Fig. 5 ist ein solcher Stützer ST z.B. aus Gießharz herstellbar und in die Außenwand 7 eines mit Öl 8 gefüllten Netztransformators einsetzbar. Die Anschlüsse A1 bis A8 entsprechen denjenigen der Fig. 4

Fig. 6 zeigt eine Aufsicht auf einen Stützer gemäß Fig. 5. Die an dem Außenring angegebenen Spannungsangaben sind beispielahft gewählte Effektivwerte für Teilnetzgeräte, die jeweils Gleichspannungen von ungefähr ± 670V (bezüglich des Fußpunktes F) erzeugen.

Wird das Netzgerät gemäß Fig. 4 beispielsweise als Modularionsverstärker für eine anodenmodulierte Hochleistungssender-Endstufe verwendet, so ist es vorteilhaft, den Netztransformator so auszubilden, daß möglichst geringe Kapazitäten zwischen den Sekundärwicklungen und dem Schirm (Bezugszeichen 3 in Fig. 1) vorhanden sind, denn dadurch entstehen bei den Schaltvorgängen lediglich geringe störende kapazitive Ströme. Diese Kapazitäten sind dadurch verringerbar, daß die Sekundärwicklungen als sogenannte Kammerwicklungen ausgeführt werden.

Die Erfindung ist nicht auf die beschriebenen Ausführungsbeispiele beschränkt, sondern sinngemäß auf weitere anwendbar. Beispielsweise ist es möglich, die in der Gleichrichteranordnung vorhandenen Gleichrichterdioden Gl1 bis Gl6 (Fig. 3, 4) durch löschbare Thyristoren ("GTO-Thyristoren") zu ersetzen. In diesem Falle können die Schalter HS1, HS2 entfallen, das heißt, durch eine Verbindungsleitung ersetzt werden.

Weiterhin ist es möglich, die Zusatzdrossel ZL entfallen zu lassen, d.h. den Fußpunkt F direkt mit dem Sternpunkt St über eine Verbindungsleitung zu verbinden. Dieser Fall ist immer dann möglich, wenn an das Netzgerät keine Forderungen im Hinblick auf die Modulation wie bei Rundfunksendern gestellt werden. Dieses ist z.B. dann der Fall, wenn das Nerzgerät zur Erzeugung einer Hochspannung bei einem Teilchenbeschleuniger verwendet wird.

Sind gemäß Fig. 4 mehrere Teilnetzgeräte T1 bis TN vorhanden, deren erzeugte Gleichspannurigen über die zugehörigen Dioden der Diodenkaskade D1 bis DN addierbar sind, so ist es vorteilhaft, die Teilnetzgeräte nach einem bestimmten Schaltschema zu schalten. Denn dadurch ist es möglich, den Wirkungsgrad des Netztransformators zu optimieren. Dazu ist erforderlich, daß in möglichst vielen Tellnetzgeräten immer die erwähnte Drehstrom-Brückengleichrichterschaltung vorhanden ist. Dieses vorteilhafte Schaltschema wird im folgenden näher erläutert:

Es wird zunächst angenommen, daß in allen Teilnetzgeräten T1 bis TN die Schalter geöffnet sind, so daß an dem Lastwiderstand R keine Spannung anliegt. Wird nun z.B. in dem Teilnetzgerät T1 der Schalter HS1 geschlossen, so liegt an dem Lastwiderstand R z.B. ein Spannung von 670V an. Soll nun diese Spannung z.B.

auf 1340V erhöht werden, so ist es vorteilhaft, zunächst den Schalter HS2 in dem Teilnetzgerät T1 zu schließen und nicht einen weiteren Schalter, z.B. HS1′ in dem Teilnetzgerät T2, in einem anderen Tellnetzgerät. Denn durch das paarweise Schließen der Schalter in einem Teilnetzgerät wird in diesem vorteilhafterweise die bereits erwähnte Brückengleichrichterschaltung erzeugt. Für die Optimierung des Wirkungsgrades, d.h., es soll ein möglichst hoher Wirkungsgrad erreicht werden, ist es vorteilhaft, wenn in Abhängigkeit von der zu erzeugenden Spannung möglichst viele Teilnerzgeräte in der Brückengleichrichterschaltung arbeiten.

Ferner ist es vorteilhaft, die Teilnetzgeräte nach einem bestimmten experimentell ermittelten Schema zu schalten, z.B. zunächst T1, dann T5, dann T2 u.s.w.. Dadurch wird erreicht, daß die Innenwiderstände des Netztransformators und/oder der Teilnetzgeräte im wesentlichen unabhängig sind von den Schalrzuständen der Schalter.

## Patentansprüche

1. Sekundärseitig schaltbares Netzgerät zum Aufsummieren von Teilgleichspannung, zumindest bestehend aus
– einem Drehstromtransformator mit drei Sekundärwicklungen (S1, S2, S3), deren erste Anschlüsse zu einem Sternpunkt (St) zusammengeschaltet sind und deren zweite Anschlüsse mit einer schaltbaren Gleichrichteranordnung (Gl1 bis Gl6) verbunden sind,
– einem der Gleichrichteranordnung (Gl1 bis Gl6) nachgeschalteten Tiefpaßfilter (TP) zum Glätten der erzeugten Gleichspannung,
– einer Diodenkaskade mit in Reihe geschalteten Dioden (D1 bis DN) zum Auf- und Abschalten von Teilgleich spannungsquellen in Dioden-Sperrichtung, für eine Hochspannungs-Gleichstromversorgung, insbesondere für den Einsatz in einem anodenmodulierten Hochleistungs-Rundfunksender oder in einem Teilchenbeschleuniger,
dadurch gekennzeichnet,
– daß an die zweiten Anschlüsse der Sekundärwicklungen (S1, S2, S3) zwei Drehstrom-Stern-Gleichrichterschaltungen (Gl1, Gl3, Gl5 sowie Gl2, Gl4, Gl6) angeschlossen sind, die bezüglich des Sternpunktes (St) zwei Gleichspannungen mit unterschiedlicher Polarität erzeugen,
– daß jede Gleichspannung durch jeweils ein LC-Siebglied (SL1, SC1 sowie SL2, SC2) geglättet wird,
– daß die Siebkondensatoren (SC1, SC2) der LC-Siebglieder einen gemeinsamen Fußpunkt (F) besitzten, der über eine Zusatzdrossel (ZL) mit dem Sternpunkt (St) verbunden ist,
– daß die an den Siebkondensatoren (SC1, SC2) anliegenden geglätteten Gleichspannungen je über einen Schalter (HS1, HS2) auf zwei hintereinandergechalteten Dioden (D1, D2) der Diodenkaskade (D1 bis DN auf- und abschaltbar sind,
– daß der Fußpunkt (F) der Siebkondensatoren (SC1, SC2) mit dem Zusammenschaltungspunkt (F′) der beiden Dioden (D1, D2) verbunden ist und
– und daß die Zusatzdrossel (ZL) eine Induktivität besitzt, derart, daß bei unabhängig voneinander betätigten Schaltern (HS1, HS2) die Welligheit der Teilgleichspannungen einen bestimmten Wert nicht übere schreitet.

2. Netzgerät nach Anspruch 1 oder Anspruch 2, dadurch gekennzeichnet, daß auf dem Drehstromtransformator mehr als drei Sekundärwicklungen vorhanden sind, daß mehrere addierbare Gleichspannungsquellen herstellbar sind (Fig. 4).

3. Netzgerät nach einem der vorhergehenden Ansprüche, dadurch gekennzeichnet, daß die Sekundärwicklungen als kapazitätsarme Kammerwicklungen ausgeführt sind.

4. Netzgerät nach einem der vorhergehenden Ansprüche, dadurch gekennzeichnet, daß auf jeweils einem Stützer (ST) die Sternpunkte und die zweiten Anschlüsse von jeweils zwei Drehstrom-Sekundärwicklungen zusammengefaßt und aus dem Drehstromtransformator herausgeführt sind (Fig. 5, 6).

5. Netzgerät nach einem der vorhergehenden Ansprüche, dadurch gekennzeichnet,
– daß mindestens zwei Drehstromtransformatoren vorhanden sind,
– daß die Primärwicklungen des einen Drehstromtransformators als Sternschaltung geschaltet sind und die Primärwicklungen des anderen Drehstromtransformators als Dreieckschaltung geschaltet sind und
– daß die Sekundärwicklungen Bestandteile von hintereinanderschaltbaren Gleichspannungsquellen sind.

6. Netzgerät nach einem der vorhergehenden Ansprüche, dadurch gekennzeichnet, daß mindestens ein Schalter (HS1, HS2) und/oder mindestens ein Gleichrichter (Gl1 bis Gl6) der Gleichrichteranordnung als Halbleiterbauelement ausgebildet ist.

7. Netzgerät nach einem der vorhergehenden Ansprüche, dadurch gekennzeichnet, daß die Gleichrichter (Gl1 bis Gl6) der Gleichrichteranordnung als schaltbare Halbleiterbauelemente ausgebildet sind derart, daß in diesen die Funktion der Schalter (HS1, HS2) enthalten ist.

8. Netzgerät nach einem der vorhergehenden Ansprüche, dadurch gekennzeichnet, daß bei einer zu erzeugenden Gleichspannung mit erhöhter zulässiger Welligkeit der Fußpunkt (F) und der Sternpunkt (St) unmittelbar verbunden sind.

9. Netzgerät nach einem der vorhergehenden Ansprüche, dadurch gekennzeichnet, daß die Gleichrichterschaltung (Gl1 bis Gl6) bei geschlossenen Schaltern (HS1, HS2) eine Drehstrom-Brückengleichrichterschaltung bildet, die einen guten Wirkungsgrad und eine geringe Restwelligkeit besitzt.

10. Netzgerät nach einem der vorhergehenden Ansprüche, dadurch gekennzeichnet,
– daß mindestens zwei Teilnetzgeräte vorhanden sind, deren Gleichspannungen über die zugehörigen Dioden der Diodenkaskade (D1 bis DN) addierbar sind und
– daß eine Optimierung des Wirkungsgrades des Netztransformators dadurch entsteht, daß bei dem Einschalten von mehr als einem Teilnetzgerät jeweils ein Teilnetzgerät vollständig eingeschaltet wird derart, daß in dem Teilnetzgerät die Drehstrom-Brückengleichrichterschaltung entsteht.

## Claims

1. Power supply unit which is switchable at the secondary side for the summation of partial direct voltages and consists at least of
– one polyphase current transformer with three secondary windings (S1, S2, S3), the first terminals of which are connected together into a star point (St) and the second terminals of which are connected with a switchable rectifier arrangement (Gl1 to Gl6),
– a low-pass filter (TP), which is connected behind the rectifier arrangement (Gl1 to Gl6), for the smoothing of the produced direct voltage,
– a diode cascade with diodes (D1 to DN) connected in series for the switching on and off of partial direct voltages in diode blocking direction, for a high voltage direct current supply, in particular for the use in an anode-modulated high-power radio transmitter or in a particle accelerator,
characterised thereby,
– that two polyphase star rectifier circuits (Gl1, Gl3, Gl5 as well as Gl2, Gl4, Gl6), which produce two direct voltages of different polarity with respect to the star point (St), are connected to the second terminals of the secondary windings (S1, S2, S3),
– that each direct voltage is smoothed by a respective inductance-capacitance member (SL1, SC1 as well as SL2, SC2),
– that the filter capacitors (SC1, SC2) of the inductance-capacitance members possess a common foot point (F), which is connected by way of an additional choke (ZL) with the star point (St),
– that the smoothed direct voltages present at the filter capacitors (SC1, SC2) are each switchable by way of a respective switch (HS1, HS2) onto and off from two diodes (D1, D2) which are connected one behind the other, of the diode cascade (D1 to DN),
– that the foot point (F) of the filter capacitors (SC1, SC2) is connected with the junction (F′) of both the diodes (D1, D2) and
– that the additional choke (ZL) has an inductance such that the ripple of the partial direct voltage does not exceed a certain value with the switches (HS1, HS2) operated one independently of the other.

2. Power supply unit according to claim 1 or claim 2, characterised thereby, that more than three secondary windings are present on the polyphase current transformer and that several addable direct voltage sources are producible (Figure 4).

3. Power supply unit according to one of the preceding claims, characterised thereby, that the secondary windings are constructed as low-capacitance chamber windings.

4. Power supply unit according to one of the preceding claims, characterised thereby, that the star points and the second terminals of each two polyphase current secondary windings are together connected to a respective pin (ST) and led out from the polyphase current transformer (Figures 5 and 6).

5. Power supply unit according to one of the preceding claims, characterised thereby
– that at least two polyphase current transformers are present,
– that the primary windings of the one polyphase current transformer are connected in star connection and the primary windings of the other polyphase current transformer are connected in delta connection and
– that the secondary windings are components of direct voltage sources which are connectable one behind the other.

6. Power supply unit according to one of the preceding claims, characterised thereby that at least one switch (HS1, HS2) and/or at least one rectifier (Gl1 to Gl6) of the rectifier arrangement is constructed as semiconductor component .

7. Power supply unit according to one of the preceding claims, characterised thereby that the rectifiers (GI1 to GI6) of the rectifier arrangement are constructed as switchable semiconductor components in such a manner that the function of the switches (HS1, HS2) is contained in these.

8. Power supply unit according to one of the preceding claims, characterised thereby, that the foot point (F) and the star point (St) are connected together directly in the case of a direct voltage to be produced with higher permissible ripple.

9. Power supply unit according to one of the preceding claims, characterised thereby, that the rectifier circuit (GI1 to GI6) with the switches (HS1, HS2) closed forms a polyphase current bridge rectifier circuit which possesses a good efficiency and a low residual ripple.

10. Power supply unit according to one of the preceding claims, characterised thereby
– that at least two partial power supply units are present, the direct voltages of which are addable by way of the associated diodes of the diode cascade (D1 to DN) and
– that an optimisation of the efficiency of the mains transformer arises thereby, that - on the switching-on of more than one partial power supply unit - one partial power supply unit is each time switched in completely in such a manner that the polyphase current bridge rectifier circuit arises in the partial power supply unit.

## Revendications

1. Appareil d'alimentation par le réseau, à commutation côté secondaire, destiné à la sommation de tensions continues partielles, constitué d'au moins
– un transformateur triphasé possédant trois enroulements secondaires (S1, S2, S3) dont les premières connexions sont reliées ensemble en un point neutre (St) et dont les secondes connexions sont reliées à un dispositif de redressement commutable (GI1 à GI6),
– un filtre passe-bas (TP) monté à la suite du dispositif de redressement (GI1 à GI6) et servant à lisser la tension continue produite et
– une cascade de diodes comprenant des diodes (D1 à DN) montées en série pour la mise en et hors circuit de sources de tension continue partielles, dans le sens du blocage des diodes, servant à une alimentation en courant continu à haute tension, utilisable en particulier dans un émetteur radioélectrique de grande puissance à anode modulée ou dans un accélérateur de particules,
caractérisé en ce
– que deux montages de redressement en étoile triphasés (GI1, GI3, GI5 ainsi que GI2, GI4, GI6), produisant deux tensions continues de polarités différentes par rapport au point neutre (St), sont raccordés aux secondes connexions des enroulements secondaires (S1, S2, S3),
– que chaque tension continue est lissée par un élément de filtrage LC (SL1, SC1 ainsi que SL2, SC2),
– que les condensateurs de filtrage (SC1, SC2) des éléments de filtrage LC possèdent une base (F) commune qui est reliée à travers une self-inductance additionnelle (ZL) au point neutre (St),
– que les tensions continues lissées, appliquées aux condensateurs de filtrage (SC1, SC2), peuvent chacune être appliquées à deux diodes (D1, D2) montées en série l'une après l'autre de la cascade de diodes (D1 à DN) et être coupées de ces deux diodes,
– que la base (F) des condensateurs de filtrage (SC1, SC2) est reliée au point de connexion (F') des deux diodes (D1, D2) et
– que la self additionnelle (ZL) possède une inductance telle que lorsque les interrupteurs (HS1, HS2) sont actionnés indépendamment l'un de l'autre, l'ondulation des tensions continues partielles ne dépasse pas une valeur déterminée.

2. Appareil d'alimentation selon la revendication 1 ou 2, caractérisé en ce que le transformateur triphasé comporte plus de trois enroulements secondaires, à l'aide desquels sont réalisables plusieurs sources de tension continue susceptibles d'être additionnées (Fig. 4).

3. Appareil d'alimentation selon une des revendications précédentes, caractérisé en ce que les enroulements secondaires sont réalisés comme des enroulements à chambres ayant une faible capacité.

4. Appareil d'alimentation selon une des revendications précédentes, caractérisé en ce que les points neutres et les secondes connexions de deux enroulements secondaires triphasés sont rassemblés chaque fois sur un isolateur s'apport (ST) et sont sortis du transformateur triphasé (Fig. 5, 6).

5. Appareil d'alimentation selon une des revendications précédentes, caractérisé en ce
– qu'il comprend au moins des transformateurs triphasés,
– que les enroulements primaires d'un transformateur triphasé sont couplés en étoile et les enroulements primaires de l'autre transformateur triphasé sont couplés en triangle et

– que les enroulements secondaires font partie de sources de tension continue susceptibles d'être connectées en série.

6. Appareil d'alimentation selon une des revendications précédentes, caractérisé en ce qu'au moins un interrupteur (HS1, HS2) et/ou au moins un redresseur (Gl1 à Gl6) du dispositif de redressement est réalisé sous la forme d'un composant à semi-conducteur.

7. Appareil d'alimentation selon une des revendications précédentes, caractérisé en ce que les redresseurs (Gl1 à Gl6) du dispositif de redressement sont réalisés sous la forme de composants à semi-conducteurs commandés, de manière que ces composants contiennent en même temps la fonction des interrupteurs (HS1, HS2).

8. Appareil d'alimentation selon une des revendications précédentes, caractérisé en ce que la base (F) et le point neutre (St) sont directement reliés l'un à l'autre au cas où l'ondulation admissible pour une tension continue à produire est plus élevée.

9. Appareil d'alimentation selon une des revendications précédentes, caractérisé en ce que le montage de redressement (Gl1 à Gl6) forme un montage de redressement en pont triphasé, possédant un bon rendement et une faible ondulation résiduelle, lorsque les interrupteurs (HS1, HS2) sont fermés.

10. Appareil d'alimentation selon une des revendications précédentes, caractérisé en ce
– qu'il comprend au moins deux appareils d'alimentation partiels dont les tensions continues peuvent être additionnées à travers les diodes correspondantes de la cascade de diodes (D1 à DN) et
– qu'une optimisation du rendement du transformateur de puissance est obtenue du fait qu'à la mise en circuit de plus d'un appareil d'alimentation partiel, un appareil d'alimentation partiel est chaque fois mis en circuit entièrement, de manière que le montage de redressement en pont triphasé soit formé dans cet appareil.

FIG.1

FIG. 2

FIG. 3

FIG. 4

FIG. 5

FIG. 6